(19) Europäisches Patentamt

European Patent Office

Office européen des brevets

(11) **EP 4 549 875 A1**

(12) # EUROPEAN PATENT APPLICATION
published in accordance with Art. 153(4) EPC

(43) Date of publication:
**07.05.2025 Bulletin 2025/19**

(21) Application number: **23831430.6**

(22) Date of filing: **27.06.2023**

(51) International Patent Classification (IPC):
**G01B 15/02** (2006.01)  **G01N 23/087** (2018.01)
**G01N 23/223** (2006.01)

(52) Cooperative Patent Classification (CPC):
**G01B 15/02; G01N 23/087; G01N 23/223**

(86) International application number:
**PCT/JP2023/023738**

(87) International publication number:
**WO 2024/004990 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **30.06.2022  JP 2022106441**

(71) Applicant: HORIBA, Ltd.
**Minami-ku
Kyoto-shi
Kyoto 601-8510 (JP)**

(72) Inventors:
• **OHASHI, Satoshi
Kyoto-shi, Kyoto 601-8510 (JP)**

• **MIYAMOTO, Shohei
Kyoto-shi, Kyoto 601-8510 (JP)**
• **AOYAMA, Tomoki
Kyoto-shi, Kyoto 601-8510 (JP)**
• **MIYASAKA, Shintaro
Kyoto-shi, Kyoto 601-8510 (JP)**
• **NAGURA, Makoto
Kyoto-shi, Kyoto 601-8510 (JP)**
• **HIROSE, Jun
Kyoto-shi, Kyoto 601-8510 (JP)**
• **MATSUNAGA, Daisuke
Kyoto-shi, Kyoto 601-8510 (JP)**

(74) Representative: **Isarpatent
Patent- und Rechtsanwälte
Barth Hassa Peckmann & Partner mbB
Friedrichstraße 31
80801 München (DE)**

(54) **THICKNESS MEASURING METHOD, X-RAY ANALYSIS DEVICE, INFORMATION PROCESSING DEVICE, AND COMPUTER PROGRAM**

(57)  There are provided a thickness measurement method, an X-ray analysis apparatus, an information processing apparatus, and a computer program that can measure the thicknesses of a larger number of multi-layer samples than before.

In the thickness measurement method, a sample including stacked first and second layers is irradiated with X-rays so that the X-rays pass through the first and second layers in this order, fluorescent X-rays generated from the first layer are detected, transmitted X-rays that have passed through the sample are detected, an X-ray absorption coefficient of the first layer and the density of the first layer are specified by element analysis based on the fluorescent X-rays, and the thickness of the first layer is calculated based on the intensities of the transmitted X-rays at two different energies, the absorption coefficient, and the density.

FIG.1

EP 4 549 875 A1

**Description**

Technical Field

The present invention relates to a thickness measurement method, an X-ray analysis apparatus, an information processing apparatus, and a computer program for measuring the thickness of a specific layer included in a multi-layer sample.

Background Art

It is sometimes necessary to measure the thickness of each layer included in a multi-layer sample. For example, one may desire to measure the thickness of a coating that covers a substrate. As a method of measuring the thickness of each layer of a multi-layer sample, there is a method of irradiating the multi-layer sample with X-rays, detecting fluorescent X-rays generated from the multi-layer sample, and measuring the thickness of each layer based on the fluorescent X-rays. In addition, there is a method of detecting transmitted X-rays that have passed through a multi-layer sample and measuring the thickness of each layer based on the transmitted X-rays. Patent Literature 1 discloses a technique for measuring the thickness of a sample based on transmitted X-rays.

Citation List

Patent Literature:

Patent Literature 1: Japanese Patent Application Laid-Open No. 11-287643 Summary

Technical Problems

In the method of measuring the thickness based on fluorescent X-rays, the detected intensity of fluorescent X-rays generated from a portion far from the front surface is low. For this reason, there is a limit to the thickness that can be measured. The information on the transmitted X-rays that have passed through the multi-layer sample is a superposition of information on the plurality of layers. For this reason, in a method for measuring a thickness based on transmitted X-rays, the composition of each layer needs to be known. Thus, the conventional methods are limited in the types of samples for which the thickness can be measured.

The present invention has been made in view of the above circumstances, and it is an object of the present invention to provide a thickness measurement method, an X-ray analysis apparatus, an information processing apparatus, and a computer program that can measure the thicknesses of a larger number of multi-layer samples than before.

Solution to Problems

A thickness measurement method according to one aspect of the present invention is characterized by comprising: irradiating a sample including stacked first and second layers with X-rays so that the X-rays pass through the first and second layers in this order; detecting fluorescent X-rays generated from the first layer; detecting transmitted X-rays that have passed through the sample; specifying an X-ray absorption coefficient of the first layer and a density of the first layer by element analysis based on the fluorescent X-rays; and calculating a thickness of the first layer based on intensities of the transmitted X-rays at two different energies, the absorption coefficient, and the density.

In one aspect of the present invention, a sample including stacked first and second layers are irradiated with X-rays, fluorescent X-rays and transmitted X-rays are detected, and the X-ray absorption coefficient of the first layer and the density of the first layer are specified based on the fluorescent X-rays. In addition, the thickness of the first layer is calculated based on the intensities of the transmitted X-rays at two energies, the X-ray absorption coefficient of the first layer, and the density of the first layer. By using the detection results of both the fluorescent X-rays and the transmitted X-rays, it is possible to measure the thickness of the first layer for non-conventional samples. By calculating the thickness of the first layer using the characteristics of the first layer analyzed based on the detection result of the fluorescent X-rays, it is possible to measure the thickness of the first layer even for samples whose composition of the first layer is unknown.

In the thickness measurement method according one aspect of the present invention, it is characterized in that a difference between the two energies is within a predetermined range.

In one aspect of the present invention, the intensities of the transmitted X-rays at two energies are used to calculate the thickness of the first layer, and the two energies are specified such that the difference between the two energies is included in the predetermined range. Since the difference between the two energies is small, the intensities of the X-rays emitted to the sample at the respective energies are almost the same. Therefore, an equation for calculating the thickness of the first layer can be approximated so that the intensity ratio of the X-rays emitted to the sample, which is included in the equation, at the two energies is omitted.

In the thickness measurement method according one aspect of the present invention, it is characterized in that an absorption edge of an element contained in the second layer is not included in an energy range between the two energies.

In one aspect of the present invention, the difference between the two energies is small, and the position of the absorption edge of the element contained in the second layer is not included in the energy range between the two energies. Therefore, the X-ray absorption coefficient of the second layer is almost the same. The equation for calculating the thickness of the first layer can be approximated so that the term, which is included in the equation and is obtained by multiplying the difference between the X-ray absorption coefficients of the second layer at the two energies by the density of the second layer and the thickness of the second layer, is omitted. By using the approximated equation, it is possible to calculate the thickness of the first layer even if the composition or thickness of the second layer is unknown.

In the thickness measurement method according one aspect of the present invention, it is characterized in that the two energies are specified by element analysis based on the fluorescent X-rays so that an absorption edge of an element contained in the first layer is included in an energy range between the two energies.

In one aspect of the present invention, the position of the absorption edge of the element contained in the first layer is included in the energy range between the two energies. For this reason, the difference between the intensities of the transmitted X-rays at the two energies increases, and the difference between the X-ray absorption coefficients of the first layer at the two energies also increases. The equation for calculating the thickness of the first layer includes the ratio between the logarithm of the ratio of the intensities of the transmitted X-rays at the two energies and the difference between the X-ray absorption coefficients of the first layer at the two energies. Since the calculation results of the equation are no longer inaccurate, it is possible to calculate the thickness of the first layer accurately.

An X-ray analysis apparatus according to one aspect of the present invention is characterized by comprising: an irradiation unit that irradiates a sample including stacked first and second layers with X-rays so that the X-rays pass through the first and second layers in this order; a fluorescent X-ray detector that detects fluorescent X-rays generated from the first layer; a transmitted X-ray detector that detects transmitted X-rays that have passed through the sample; and an analysis unit, wherein the analysis unit specifies an X-ray absorption coefficient of the first layer and a density of the first layer by element analysis based on the fluorescent X-rays, and calculates a thickness of the first layer based on intensities of the transmitted X-rays at two different energies, the absorption coefficient, and the density.

In one aspect of the present invention, the X-ray analysis apparatus irradiates the sample including the stacked first and second layers with X-rays, detects fluorescent X-rays and transmitted X-rays, and specifies an X-ray absorption coefficient of the first layer and the density of the first layer by element analysis based on the fluorescent X-rays. In addition, the X-ray analysis apparatus calculates the thickness of the first layer based on the intensities of the transmitted X-rays at the two energies, the X-ray absorption coefficient of the first layer, and the density of the first layer. By calculating the thickness of the first layer using the characteristics of the first layer analyzed based on the detection result of the fluorescent X-rays, it is possible to measure the thickness of the first layer even for samples whose composition of the first layer is unknown.

In the X-ray analysis apparatus according one aspect of the present invention, it is characterized in that the analysis unit calculates the thickness of the first layer by element analysis based on the fluorescent X-rays without using a detection result of the transmitted X-rays.

In one aspect of the present invention, the X-ray analysis apparatus can also measure the thickness of the first layer included in the sample based on the detection result of only the fluorescent X-rays, without using the detection result of the transmitted X-rays. When the thickness of the first layer is relatively small, the X-ray analysis apparatus can easily measure the thickness of the first layer based on the detection result of only the fluorescent X-rays. When the thickness of the first layer is relatively large, the X-ray analysis apparatus can measure the thickness of the first layer by using the detection results of both the fluorescent X-rays and the transmitted X-rays.

An information processing apparatus according to one aspect of the present invention is characterized by comprising: an acquisition unit that acquires a detection result of fluorescent X-rays generated from a first layer and a detection result of transmitted X-rays that have passed through a sample, which includes the first layer and a second layer that are stacked, by irradiating the sample with X-rays so that the X-rays pass through the first and second layers in this order; a specifying unit that specifies an X-ray absorption coefficient of the first layer and a density of the first layer by element analysis based on the detection result of the fluorescent X-rays; and a calculation unit that calculates a thickness of the first layer based on intensities of the transmitted X-rays at two different energies, the absorption coefficient, and the density.

A computer program according to one aspect of the present invention is characterized by causing a computer to execute processing of: specifying an X-ray absorption coefficient of a first layer and a density of the first layer by performing element analysis based on a detection result of fluorescent X-rays that are generated from the first layer by irradiating a sample, which includes the first layer and a second layer that are stacked, with X-rays so that the X-rays pass through the first and second layers in this order; and calculating a thickness of the first layer based on the absorption coefficient, the density, and intensities of transmitted X-rays at two different energies included in a detection result of the transmitted X-rays that have passed through the sample.

In one aspect of the present invention, the X-ray absorption coefficient of the first layer and the density of the first layer are specified by information processing based on the fluorescent X-rays detected by irradiating the sample including the stacked first and second layers with X-rays. In addition, the thickness of the first layer is calculated by information processing based on the intensities of the detected transmitted X-rays at the two energies, the X-ray absorption coefficient of the first layer, and the density of the first layer. By calculating the thickness of the first layer using the characteristics of the first layer analyzed based on the detection result of the fluorescent X-rays, it is possible to measure the thickness of the first layer even for samples whose composition of the first layer is unknown.

Advantageous Effects of Invention

According to the present invention, it is possible to measure a larger thickness than before, and it is possible to measure the thickness of the first layer even for samples whose composition of the first layer is unknown. Therefore, the present invention has excellent effects, such as being able to measure the thickness of the first layer included in a larger number of multi-layer samples than before.

Brief Description of Drawings

FIG. 1 is a block diagram showing an example of the functional configuration of an X-ray analysis apparatus.
FIG. 2 is a block diagram showing an example of the internal configuration of an analysis unit.
FIG. 3 is a schematic cross-sectional view of a sample.
FIG. 4 is a graph showing an example of the spectrum of transmitted X-rays.
FIG. 5 is a flowchart showing an example of the procedure of processing for measuring the thickness of a first layer, which is performed by the X-ray analysis apparatus.
FIG. 6 is a flowchart showing an example of the procedure of processing performed by an X-ray analysis apparatus according to Embodiment 2 to measure the thickness of a first layer based on fluorescent X-rays.

Description of Embodiments

Hereinafter, the present invention will be specifically described with reference to the diagrams showing embodiments thereof.

<Embodiment 1>

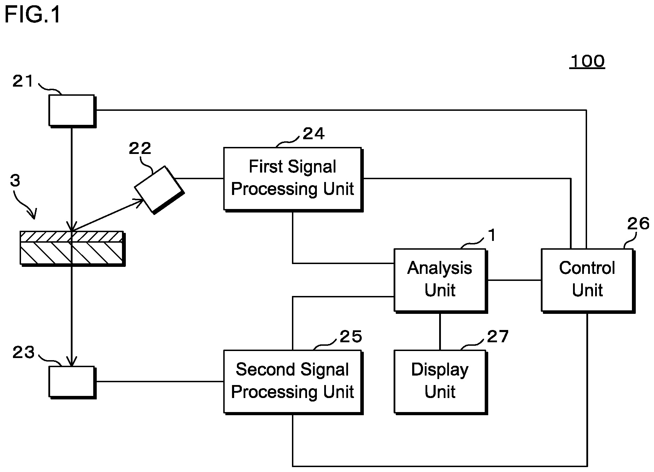

FIG. 1 is a block diagram showing an example of the functional configuration of an X-ray analysis apparatus 100. The X-ray analysis apparatus 100 includes an irradiation unit 21 that irradiates a sample 3 with X-rays, a fluorescent X-ray detector 22 that detects fluorescent X-rays generated from the sample 3 irradiated with X-rays, and a transmitted X-ray detector 23 that detects transmitted X-rays that have passed through the sample 3. The sample 3 is a multi-layer sample that includes a plurality of stacked layers. The X-ray analysis apparatus 100 performs a thickness measurement method for measuring the thickness of a layer included in the sample 3. The irradiation unit 21 includes an X-ray source that generates X-rays. The X-ray source is, for example, an X-ray tube. In FIG. 1, X-rays emitted to the sample 3, fluorescent X-rays, and transmitted X-rays are indicated by arrows.

The fluorescent X-ray detector 22 and the transmitted X-ray detector 23 are radiation detectors having radiation detection elements configured using semiconductors. For example, each of the fluorescent X-ray detector 22 and the transmitted X-ray detector 23 is an SDD (Silicon Drift Detector). The fluorescent X-ray detector 22 is disposed so as to face the surface of the sample 3 that is irradiated with X-rays. When the sample 3 is irradiated with X-rays from the irradiation unit 21, fluorescent X-rays are generated in the sample 3. The fluorescent X-rays are emitted from the front surface of the sample 3 to be incident on the fluorescent X-ray detector 22. The fluorescent X-ray detector 22 detects the incident fluorescent X-rays and outputs a signal having an intensity corresponding to the energy of the fluorescent X-rays.

The transmitted X-ray detector 23 is disposed at a position facing the irradiation unit 21. With the sample 3 disposed between the irradiation unit 21 and the transmitted X-ray detector 23, the sample 3 is irradiated with X-rays from the irradiation unit 21. Some of the X-rays emitted from the irradiation unit 21 to the sample 3 pass through the sample 3. The X-rays that have passed through the sample 3 are called transmitted X-rays. The transmitted X-rays are incident on the transmitted X-ray detector 23. The transmitted X-ray detector 23 detects the incident transmitted X-rays and outputs a signal having an intensity corresponding to the energy of the transmitted X-rays.

A first signal processing unit 24 is connected to the fluorescent X-ray detector 22, and a second signal processing unit 25 is connected to the transmitted X-ray detector 23. The first signal processing unit 24 and the second signal processing unit 25 are connected to an analysis unit 1. The analysis unit 1 is configured using a computer. A display unit 27 such as a liquid crystal display or an EL display (Electroluminescent Display) is connected to the analysis unit 1. The irradiation unit 21, the first signal processing unit 24, the second signal processing unit 25, and the analysis unit 1 are connected to a control unit 26.

The control unit 26 controls the operations of the irradiation unit 21, the first signal processing unit 24, the second signal processing unit 25, and the analysis unit 1. The control unit 26 is configured using a computer including an arithmetic unit that performs a calculation for controlling each unit. The control unit 26 may be configured to receive the user's operation and control each unit of the X-ray analysis apparatus 100 according to the received operation. The control unit 26 and the analysis unit 1 may be integrally configured.

The fluorescent X-ray detector 22 outputs a signal having an intensity corresponding to the energy of the fluorescent X-rays, and the first signal processing unit 24 receives the signal output from the fluorescent X-ray detector 22. The first signal processing unit 24 detects a signal value corresponding to the energy of the fluorescent X-rays detected by the fluorescent X-ray detector 22 by detecting the intensity of the received signal. The first signal processing unit 24 counts the signals for each signal value, and outputs to the analysis unit 1 data indicating the relationship between the signal value and the count number.

The transmitted X-ray detector 23 outputs a signal having an intensity corresponding to the energy of the transmitted X-rays, and the second signal processing unit 25 receives the signal output from the transmitted X-ray detector 23. The second signal processing unit 25 detects a signal value corresponding to the energy of the transmitted X-rays detected by the transmitted X-ray detector 23 by detecting the intensity of the received signal. The second signal processing unit 25 counts the signals for each signal value, and outputs to the analysis unit 1 data indicating the relationship between the signal value and the count number.

The analysis unit 1 receives the data indicating the relationship between the signal value and the count number that has been output from the first signal processing unit 24. The analysis unit 1 generates a spectrum of the fluorescent X-rays detected by the fluorescent X-ray detector 22 based on the data from the first signal processing unit 24. The signal value corresponds to the energy of the fluorescent X-rays, and the count number corresponds to the number of times the fluorescent X-rays are detected, that is, the intensity of the fluorescent X-rays. Therefore, from the relationship between the signal value and the count number, a spectrum of the fluorescent X-rays indicating the relationship between the energy and intensity of the fluorescent X-rays can be obtained.

In addition, the analysis unit 1 receives the data indicating the relationship between the signal value and the count number that has been output from the second signal processing unit 25. The analysis unit 1 generates a spectrum of the transmitted X-rays detected by the transmitted X-ray detector 23 based on the data from the second signal processing unit 25. The signal value corresponds to the energy of the transmitted X-rays, and the count number corresponds to the number of times the transmitted X-rays are detected, that is, the intensity of the transmitted X-rays. Therefore, from the relationship between the signal value and the count number, a spectrum of the transmitted X-rays indicating the relationship between the energy and intensity of the transmitted X-rays can be obtained.

The process of counting the signals output from the fluorescent X-ray detector 22 and the transmitted X-ray detector 23 for each signal value may be performed by the analysis unit 1 instead of the first signal processing unit 24 and the second signal processing unit 25. The generation of the spectrum of the fluorescent X-ray may be performed by the first signal processing unit 24, and the generation of the spectrum of the transmitted X-ray may be performed by the second signal processing unit 25. The analysis unit 1 stores spectrum data indicating the spectrum of the fluorescent X-rays and spectrum data indicating the spectrum of the transmitted X-rays. The display unit 27 displays the spectrum of the fluorescent X-rays or the transmitted X-rays. The user can check the spectrum of the fluorescent X-rays from the sample 3 or the spectrum of the transmitted X-rays that have passed through the sample 3. In addition, the analysis unit 1 performs information processing based on the spectra of the fluorescent X-rays and the transmitted X-rays. More specifically, the analysis unit 1 performs information processing in order to measure the thickness of a layer included in the sample 3. The analysis unit 1 corresponds to an information processing apparatus that performs information processing for measuring the thickness of a layer included in the sample 3.

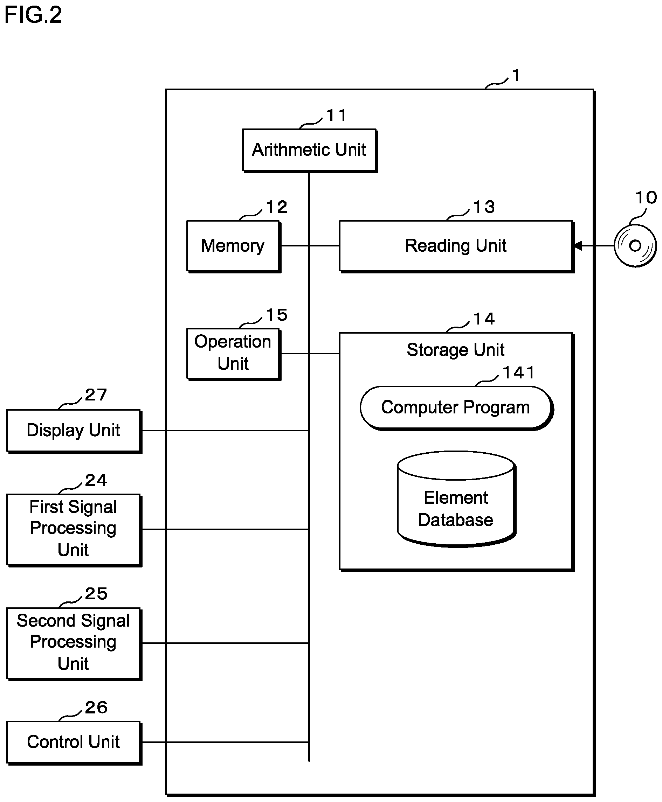

FIG. 2 is a block diagram showing an example of the internal configuration of the analysis unit 1. The analysis unit 1 is configured using a computer such as a personal computer. The analysis unit 1 includes an arithmetic unit 11, a memory 12, a reading unit 13, a storage unit 14, and an operation unit 15. The arithmetic unit 11 is configured using, for example, a CPU (Central Processing Unit), a GPU (Graphics Processing Unit), or a multi-core CPU. The arithmetic unit 11 may be configured using a quantum computer. The memory 12 stores temporary data generated along with calculations. The memory 12 is, for example, a RAM (Random Access Memory). The reading unit 13 reads information from a recording medium 10 such as an optical disk or a portable memory. The storage unit 14 is non-volatile, and is, for example, a hard disk or a non-volatile semiconductor memory. The operation unit 15 receives an input of information, such as text, by receiving an operation from the user. The operation unit 15 is, for example, a touch panel, a keyboard, or a pointing device. The user inputs various instructions to the analysis unit 1 by operating the operation unit 15. The analysis unit 1 receives the instructions input using the operation unit 15.

The arithmetic unit 11 causes the reading unit 13 to read a computer program 141 recorded on the recording medium 10, and stores the read computer program 141 in the storage unit 14. The arithmetic unit 11 performs processing necessary for the analysis unit 1 according to the computer program 141. In addition, the computer program 141 may be downloaded from the outside of the analysis unit 1. Alternatively, the computer program 141 may be stored in advance in the analysis unit 1. In these cases, the analysis unit 1 may not include the reading unit 13. In addition, the analysis unit 1 may be configured by a plurality of computers.

The display unit 27, the first signal processing unit 24, the second signal processing unit 25, and the control unit 26 are connected to the analysis unit 1. The display unit 27 displays an image. The analysis unit 1 outputs information necessary for information processing by displaying an image including information on the display unit 27. The analysis unit 1 receives signals from the first signal processing unit 24 and the second signal processing unit 25, and receives a control signal from the control unit 26. In addition, the analysis unit 1 and the control unit 26 may be configured by the same computer.

The storage unit 14 stores an element database in which data necessary for element analysis is recorded. In the element database, information describing the characteristics of a plurality of elements is recorded. For example, the positions of peaks included in the fluorescent X-ray spectrum of each element, the intensity ratio of a plurality of peaks, the positions of absorption edges, the mass absorption coefficient, and the density are recorded in the element database. The position of the peak and the position of the absorption edge are expressed as the energy of X-rays. In addition, the element database may be provided outside the analysis unit 1. For example, the element database is stored in a storage device connected to the analysis unit 1 through a communication network. The element database may be configured using a cloud. The arithmetic unit 11 accesses the element database through the communication network and performs processing to refer to the data recorded in the element database.

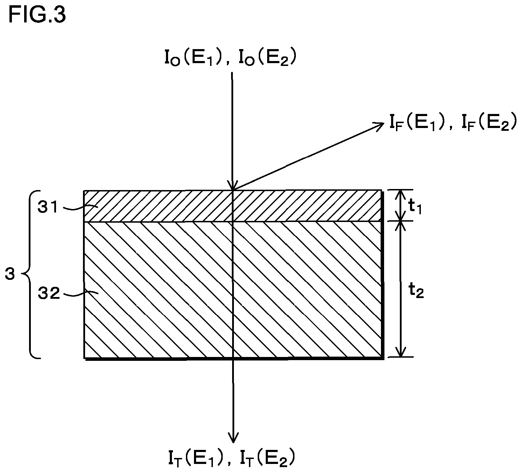

FIG. 3 is a schematic cross-sectional view of the sample 3. The sample 3 includes a first layer 31 and a second layer 32 that are stacked. The thickness of the first layer 31 is $t_1$, and the thickness of the second layer 32 is $t_2$. For example, the second layer 32 is a base material, and the first layer 31 is a coating that covers the base material. For example, the sample 3 is a part of a plate-shaped material. The analysis unit 1 performs information processing for measuring the thickness of the first layer 31 included in the sample 3. As shown in FIG. 3, X-rays are emitted to the sample 3 so as to pass through the first layer 31 and the second layer 32 in this order. Fluorescent X-rays are generated from the first layer 31 irradiated with X-rays. The fluorescent X-rays detected by the fluorescent X-ray detector 22 are mainly fluorescent X-rays generated from the first layer 31. The fluorescent X-rays generated from the second layer 32 are absorbed by the first layer 31 and are hardly detected by the fluorescent X-ray detector 22.

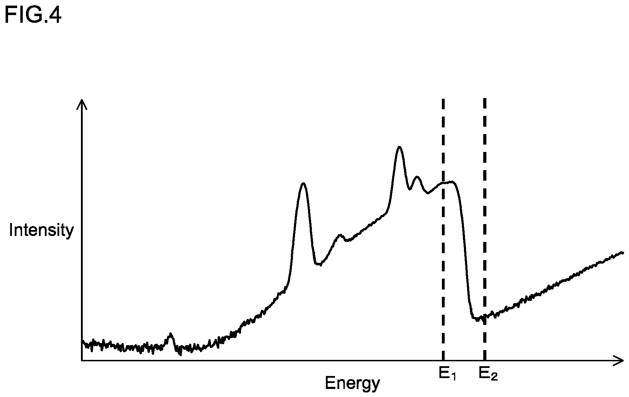

FIG. 4 is a graph showing an example of the spectrum of transmitted X-rays. In FIG. 4, the horizontal axis indicates the energy of transmitted X-rays, and the vertical axis indicates the intensity of transmitted X-rays. For example, the intensity of X-rays is expressed as a count number per unit time. Two different energies of transmitted X-rays from which the spectra are obtained are defined as $E_1$ and $E_2$. Both of the energies $E_1$ and $E_2$ are different from the energy of the peak of the spectrum of the fluorescent X-rays generated from the first layer 31. In addition, both of the energies $E_1$ and $E_2$ are different from the absorption edge of the element contained in the first layer 31 or the second layer 32.

As shown in FIG. 3, the intensity of X-rays emitted to the sample 3 at the energy $E_1$ is defined as $I_0(E_1)$, and the intensity at the energy $E_2$ is defined as $I_0(E_2)$. The intensities $I_0(E_1)$ and $I_0(E_2)$ of X-ray are intensities before the X-rays are incident on the sample 3. The intensity of detected fluorescent X-rays at the energy $E_1$ is defined as $I_F(E_1)$, and the intensity at the energy $E_2$ is defined as $I_F(E_2)$. The intensity of detected transmitted X-rays at the energy $E_1$ is defined as $I_T(E_1)$, and the intensity at the energy $E_2$ is defined as $I_T(E_2)$.

The mass absorption coefficient of the first layer 31 for X-rays at the energy $E_1$ is defined as $\mu_1(E_1)$, and the mass absorption coefficient of the first layer 31 for X-rays at the energy $E_2$ is defined as $\mu_1(E_2)$. The mass absorption coefficient of the second layer 32 for X-rays at the energy $E_1$ is defined as $\mu_2(E_1)$, and the mass absorption coefficient of the second layer 32 for X-rays at the energy $E_2$ is defined as $\mu_2(E_2)$. The density of the first layer 31 is defined as $\rho_1$, and the density of the second layer 32 is defined as $\rho_2$. The transmittance of the sample 3 for X-rays at the energy $E_1$ is defined as $T(E_1)$, and the transmittance of the sample 3 for X-rays at the energy $E_2$ is defined as $T(E_2)$. The transmittances $T(E_1)$ and $T(E_2)$ are expressed by the following Equations (1) and (2).

$$\ln(T(E_1)) = \ln(I_T(E_1)/I_0(E_1))$$

$$= -\mu_1(E_1)\rho_1 t_1 - \mu_2(E_1)\rho_2 t_2 \ldots (1)$$

$$\ln(T(E_2)) = \ln(I_T(E_2)/I_0(E_2))$$

$$= - \mu_1(E_2)\rho_1 t_1 - \mu_2(E_2)\rho_2 t_2 \ldots (2)$$

By performing subtraction between Equation (1) and Equation (2), the following Equation (3) is obtained.

$$\ln(T(E_1)) - \ln(T(E_2))$$

$$= \ln(I_T(E_1)/I_0(E_1)) - \ln(I_T(E_2)/I_0(E_2))$$

$$= - (\mu_1(E_1)\rho_1 t_1 + \mu_2(E_1)\rho_2\, t_2)$$

$$+ (\mu_1(E_2)\rho_1 t_1 + \mu_2(E_2)\rho_2\, t_2)$$

$$\ln(T(E_1)/T(E_2))$$

$$= \ln(\{I_T(E_1)/I_T(E_2)\} \cdot \{I_0(E_2)/I_0(E_1)\})$$

$$= (\mu_1(E_2) - \mu_1(E_1))\rho_1 t_1$$

$$+ (\mu_2(E_2) - \mu_2(E_1))\rho_2 t_2 \ldots (3)$$

Here, it is assumed that $E_2 = E_1 + \Delta E$ and $\Delta E \approx 0$. That is, it is assumed that the energy $E_2$ is a value very close to the energy $E_1$. At this time, the intensities of X-rays emitted to the sample 3 at the energies $E_1$ and $E_2$ are almost the same, $I_0(E_1) \approx I_0(E_2)$. In addition, it is assumed that the absorption edge of the element contained in the second layer 32 is not included in the energy range between the energy $E_1$ and the energy $E_2$. In this case, the mass absorption coefficients of the second layer 32 for X-rays at the energies $E_1$ and $E_2$ are approximately the same, $\mu_2(E_1) \approx \mu_2(E_2)$. From Equation (3), the following Equation (4) is obtained.

$$\ln(T(E_1)/T(E_2))$$

$$\approx \ln(I_T(E_1)/I_T(E_2))$$

$$\approx (\mu_1(E_2) - \mu_1(E_1))\rho_1 t_1 \ldots (4)$$

From Equation (4), the following Equation (5) is obtained as an equation for calculating the thickness $t_1$ of the first layer 31.

$$t_1 \approx \ln(I_T(E_1)/I_T(E_2))/\{(\mu_1(E_2) - \mu_1(E_1))\rho_1\} \ldots (5)$$

By using Equation (5), it is possible to calculate the thickness $t_1$ of the first layer 31. $I_T(E_1)$ and $I_T(E_2)$ of the transmitted X-rays are obtained from the spectrum of the transmitted X-rays. When the absorption edge of an element contained in the first layer 31 is included in the energy range between the energy $E_1$ and the energy $E_2$, the difference between the intensities $I_T(E_1)$ and $I_T(E_2)$ of the transmitted X-rays increases, and accordingly, the difference between the mass absorption coefficients $\mu_1(E_2)$ and $\mu_1(E_1)$ of the first layer 31 for the X-rays also increases.

When calculating the thickness $t_1$ of the first layer 31 using Equation (5), the intensities $I_0(E_1)$ and $I_0(E_2)$ of the X-rays emitted to the sample 3 are not used in the calculation. Therefore, it is not necessary to acquire the X-rays emitted to the sample 3. In addition, the mass absorption coefficients $\mu_2(E_1)$ and $\mu_2(E_2)$ of the second layer 32 for X-rays, the density $\rho_2$ of the second layer 32, and the thickness $t_2$ of the second layer 32 are not used in the calculation. Therefore, even if the composition or the thickness $t_2$ of the second layer 32 is unknown, it is possible to calculate the thickness $t_1$ of the first layer 31.

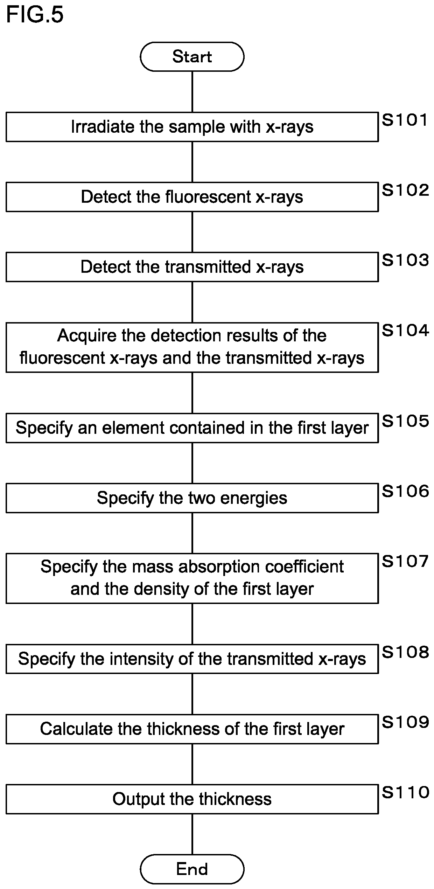

FIG. 5 is a flowchart showing an example of the procedure of processing for measuring the thickness $t_1$ of the first layer 31, which is performed by the X-ray analysis apparatus 100. Hereinafter, the step is abbreviated as S. The analysis unit 1 performs processing in such a manner that the arithmetic unit 11 performs information processing according to the computer program 141. The irradiation unit 21 generates X-rays and irradiates the sample 3 with the X-rays (S101). The sample 3 is held in the X-ray analysis apparatus 100 so that X-rays pass through the first layer 31 and the second layer 32 in this order. By the emission of X-rays, fluorescent X-rays are generated from the first layer 31. The fluorescent X-ray detector 22 detects the fluorescent X-rays (S102). The transmitted X-ray detector 23 detects the transmitted X-rays that have passed through the sample 3 (S103).

The fluorescent X-ray detector 22 outputs a signal having an intensity corresponding to the energy of the fluorescent X-rays to the first signal processing unit 24, and the first signal processing unit 24 counts the signals for each signal value and outputs data indicating the relationship between the signal value and the count number to the analysis unit 1. The transmitted X-ray detector 23 outputs a signal having an intensity corresponding to the energy of the transmitted X-rays to the second signal processing unit 25, and the second signal processing unit 25 counts the signals for each signal value and outputs data indicating the relationship between the signal value and the count number to the analysis unit 1. The analysis unit 1 acquires the detection results of the fluorescent X-rays and the transmitted X-rays by receiving the data from the first signal processing unit 24 and the second signal processing unit 25 (S104). The analysis unit 1 generates spectra of the fluorescent X-rays and the transmitted X-rays, and stores the spectrum data in the storage unit 14. The process of S104 corresponds to an acquisition unit.

The analysis unit 1 specifies an element contained in the first layer 31 by performing element analysis based on the spectrum of fluorescent X-rays (S105). In S105, for example, the arithmetic unit 11 specifies the positions of peaks included in the fluorescent X-ray spectrum and the intensity ratio of a plurality of the peaks, and specifies an element by searching the element database for an element having a matching peak position and intensity ratio of a plurality of peaks. When the first layer 31 contains a plurality of elements, the arithmetic unit 11 specifies the plurality of elements.

The analysis unit 1 specifies the two energies $E_1$ and $E_2$ (S106). In S106, the arithmetic unit 11 specifies $E_1$ and $E_2$ as energies different from the positions of the peaks included in the fluorescent X-ray spectrum. The arithmetic unit 11 specifies the energies $E_1$ and $E_2$ so that the position of the absorption edge of the element contained in the first layer 31, which is recorded in the element database, is included in the energy range between $E_1$ and $E_2$. In addition, the arithmetic unit 11 specifies the energies $E_1$ and $E_2$ so that the difference between the two energies $E_1$ and $E_2$ is included in a predetermined range. The predetermined range is a small range in which the intensities $I_0(E_1)$ and $I_0(E_2)$ of X-rays emitted to the sample 3 are almost the same. For example, the arithmetic unit 11 specifies the energies $E_1$ and $E_2$ so that the absolute value of the difference between $E_1$ and $E_2$ is equal to or less than a predetermined threshold value. The threshold value is stored in advance in the storage unit 14.

In S106, the arithmetic unit 11 specifies the energies $E_1$ and $E_2$ that are in the highest possible energy range. The higher the energy of X-rays, the easier the X-rays are to pass through the sample 3, and the greater the intensity of the transmitted X-rays. Since the intensities $I_T(E_1)$ and $I_T(E_2)$ of the detected transmitted X-rays increase, the S/N ratio (signal-to-noise ratio) increases.

When the element contained in the second layer 32 is known, the arithmetic unit 11 specifies the energies $E_1$ and $E_2$ so that the position of the absorption edge of the element contained in the second layer 32 is not included in the energy range between $E_1$ and $E_2$. In this case, the position of the absorption edge of the element contained in the second layer 32 is stored in the storage unit 14. Alternatively, information indicating the element contained in the second layer 32 is stored in the storage unit 14, and the arithmetic unit 11 specifies the position of the absorption edge with reference to the element database. The user may input the position of the absorption edge of the element contained in the second layer 32 or information indicating the element contained in the second layer 32 to the analysis unit 1 by operating the operation unit 15.

In S106, the arithmetic unit 11 specifies $E_1$ and $E_2$ by selecting the two energies $E_1$ and $E_2$ that meet the conditions from among the energies of detected transmitted X-rays. Combinations of the two energies $E_1$ and $E_2$ may be stored in advance in the storage unit 14, and the arithmetic unit 11 may specify the two energies $E_1$ and $E_2$ by selecting a combination that meets the conditions from among a plurality of stored combinations. The user may input the values of the two energies $E_1$ and $E_2$ by operating the operation unit 15, and the arithmetic unit 11 may specify the two energies $E_1$ and $E_2$ by acquiring the input values of $E_1$ and $E_2$.

The analysis unit 1 specifies the mass absorption coefficients $\mu_1(E_1)$ and $\mu_1(E_2)$ of the first layer 31 for X-rays and the density $\rho_1$ of the first layer 31 by element analysis (S107). When the first layer 31 contains a single element, in S107, the arithmetic unit 11 acquires the mass absorption coefficients $\mu_1(E_1)$ and $\mu_1(E_2)$ and the density $\rho_1$ of the element contained in the first layer 31 from the element database.

When the first layer 31 contains a plurality of elements, in S107, the arithmetic unit 11 specifies the ratio of the contents of the plurality of elements based on the fluorescent X-ray spectrum. For example, the arithmetic unit 11 specifies the ratio of the contents of a plurality of elements based on the intensity ratio of the peaks caused by the respective elements. The arithmetic unit 11 specifies the composition of the first layer 31 by specifying the ratio of the contents of the plurality of elements. The arithmetic unit 11 specifies the mass absorption coefficients at the energies $E_1$ and $E_2$ and the density of the first layer 31 according to the composition of the first layer 31. For example, the arithmetic unit 11 calculates the mass absorption coefficients $\mu_1(E_1)$ and $\mu_1(E_2)$ of the first layer 31 for X-rays by calculating a weighted average of the mass absorption coefficients of a plurality of elements at the energies $E_1$ and $E_2$ recorded in the element database according to the ratio of the contents of the plurality of elements. Similarly, the arithmetic unit 11 calculates the density $\rho_1$ of the first layer 31 by calculating a weighted average of the densities of a plurality of elements recorded in the element database according to the ratio of the contents of the plurality of elements. Alternatively, the arithmetic unit 11 may specify the density $\rho_1$ by acquiring a density associated with the composition of the first layer 31 from a database in which the composition and density of a substance are associated with each other. The process of S107 corresponds to a specifying unit.

The analysis unit 1 specifies the intensities $I_T(E_1)$ and $I_T(E_2)$ of the transmitted X-rays at the two energies $E_1$ and $E_2$ (S108). In S108, the arithmetic unit 11 specifies the intensities $I_T(E_1)$ and $I_T(E_2)$ of the transmitted X-rays by reading the intensities of the transmitted X-rays at the energies $E_1$ and $E_2$ from the spectrum of the transmitted X-rays. The processes of S105 to S108 may be performed in a different order.

The arithmetic unit 11 calculates the thickness $t_1$ of the first layer 31 (S109). In S109, the arithmetic unit 11 calculates the thickness $t_1$ of the first layer 31 by substituting the mass absorption coefficients $\mu_1(E_1)$ and $\mu_1(E_2)$ of the first layer 31 for X-rays, the density $\rho_1$ of the first layer 31, and the intensities $I_T(E_1)$ and $I_T(E_2)$ of the transmitted X-rays into Equation (5) and performing the calculation expressed by Equation (5). The process of S109 corresponds to a calculation unit. Through the processes of S101 to S109, the X-ray analysis apparatus 100 measures the thickness $t_1$ of the first layer 31.

The analysis unit 1 outputs the calculated thickness $t_1$ of the first layer 31 (S110). In S110, the arithmetic unit 11 outputs the thickness $t_1$ by displaying the value of the calculated thickness $t_1$ of the first layer 31 on the display unit 27. The arithmetic unit 11 stores the thickness $t_1$ of the first layer 31 in the storage unit 14. After the end of S110, the analysis unit 1 ends the process for measuring the thickness $t_1$ of the first layer 31.

As described above in detail, the X-ray analysis apparatus 100 irradiates the sample 3 with X-rays, detects fluorescent X-rays and transmitted X-rays, and calculates the thickness $t_1$ of the first layer 31 using the mass absorption coefficient of the first layer 31 for X-rays and the density of the first layer 31, which are specified based on the fluorescent X-rays, and using the intensity of the transmitted X-rays. In conventional techniques that use only the detection result of fluorescent X-rays, there is a limit on the thickness that can be measured. In the present embodiment, however, it is possible to measure a larger thickness by using the detection results of fluorescent X-rays and transmitted X-rays. In addition, in the present embodiment, the characteristics of the first layer 31, such as a mass absorption coefficient for X-rays, are analyzed based on the detection result of fluorescent X-rays, and the thickness $t_1$ of the first layer 31 is calculated using the analyzed characteristics of the first layer 31. Therefore, even in the case of the sample 3 in which the composition of the first layer 31 is unknown, it is possible to measure the thickness of the first layer 31. Therefore, it is possible to measure the thickness of the first layer 31 for a larger number of multi-layer samples than before.

In the present embodiment, the intensities of transmitted X-rays at the two energies $E_1$ and $E_2$ are used, and the energies $E_1$ and $E_2$ are specified so that the difference between the two energies $E_1$ and $E_2$ is included in a small predetermined range. Since the difference between the two energies $E_1$ and $E_2$ is small, the intensities $I_0(E_1)$ and $I_0(E_2)$ of the X-rays emitted to the sample 3 are almost the same. Therefore, Equation (3) can be approximated such that $I_0(E_2)/I_0(E_1)$ included in Equation (3) for calculating the thickness $t_1$ of the first layer 31 is omitted. As a result, the calculation of the thickness $t_1$ of the first layer 31 is simplified, and there is no need to measure the intensities $I_0(E_1)$ and $I_0(E_2)$ before the X-rays are incident on the sample 3. For this reason, the measurement of the thickness $t_1$ of the first layer 31 is simplified.

In the present embodiment, the position of the absorption edge of the element contained in the second layer 32 is not included in the energy range between the two energies $E_1$ and $E_2$. Since the difference between the two energies $E_1$ and $E_2$ is small and the position of the absorption edge of the element contained in the second layer 32 is not included between $E_1$ and $E_2$, the mass absorption coefficients $\mu_2(E_1)$ and $\mu_2(E_2)$ of the second layer 32 for X-rays are almost the same. Therefore, Equation (3) can be approximated such that the term obtained by multiplying the difference between $\mu_2(E_1)$ and $\mu_2(E_2)$ by the density $\rho_2$ of the second layer 32 and the thickness $t_2$ of the second layer 32, which is included in Equation (3) for calculating the thickness $t_1$ of the first layer 31, is omitted. As a result, the thickness $t_1$ of the first layer 31 can be calculated using Equation (5), which is an approximation of Equation (3). By using Equation (5), the thickness $t_1$ of the first layer 31 can be calculated regardless of the characteristics of the second layer 32. Therefore, even if the composition or thickness of the second layer 32 is unknown, it is possible to measure the thickness $t_1$ of the first layer 31.

In the present embodiment, the position of the absorption edge of the element contained in the first layer 31 is included in the energy range between the two energies $E_1$ and $E_2$. Therefore, the difference between the intensities $I_T(E_1)$ and $I_T(E_2)$ of the transmitted X-rays increases, and the difference between the mass absorption coefficients $\mu_1(E_2)$ and $\mu_1(E_1)$ of the first layer 31 for X-rays also increases. When the position of the absorption edge is not included between the energies $E_1$ and $E_2$, the intensities $I_T(E_1)$ and $I_T(E_2)$ of the transmitted X-rays are almost the same, and the mass absorption coefficients $\mu_1(E_2)$ and $\mu_1(E_1)$ are also almost the same. In this case, Equation (5) is an equation that divides a value close to zero by a value close to zero. For this reason, the calculation result of Equation (5) may be inaccurate. In the present embodiment, since the difference between the intensities $I_T(E_1)$ and $I_T(E_2)$ of transmitted X-rays is large and the difference between the mass absorption coefficients $\mu_1(E_2)$ and $\mu_1(E_1)$ is also large, the calculation result of Equation (5) is accurate. Therefore, the thickness $t_1$ of the first layer 31 can be accurately calculated using Equation (5).

**EP 4 549 875 A1**

In the present embodiment, the two energies $E_1$ and $E_2$ are in the high energy range. The higher the energy of X-rays, the easier the X-rays are to pass through the sample 3. For this reason, even if the sample 3 is thick, the transmitted X-rays can be detected. Therefore, even when the sample 3 is thick, it is possible to measure the thickness $t_1$ of the first layer 31. In addition, since the energies $E_1$ and $E_2$ are in the high energy range, the intensities $I_T(E_1)$ and $I_T(E_2)$ of the transmitted X-rays increase, and the S/N ratio increases. By using the intensity of the transmitted X-rays with a large S/N ratio, it is possible to measure the thickness $t_1$ of the first layer 31 with high accuracy.

In Embodiment 1, an example of calculating the thickness $t_1$ of the first layer 31 using Equation (5) has been mainly shown. However, the X-ray analysis apparatus 100 may be configured to calculate the thickness $t_1$ of the first layer 31 using another equation. For example, the X-ray analysis apparatus 100 may be configured to calculate the thickness $t_1$ of the first layer 31 using Equation (3). In this form, the composition and thickness of the second layer 32 are known, and the mass absorption coefficients $\mu_2(E_1)$ and $\mu_2(E_2)$ of the second layer 32 for X-rays, the density $\rho_2$ of the second layer 32, and the thickness $t_2$ of the second layer 32 are stored in the storage unit 14. The analysis unit 1 calculates the thickness $t_1$ of the first layer 31 according to Equation (3) using the information stored in the storage unit 14. In this form, the difference between the two energies $E_1$ and $E_2$ may not be included in the predetermined range. In this form, the position of the absorption edge of the element contained in the second layer 32 may be included in the energy range between the two energies $E_1$ and $E_2$, or the position of the absorption edge of the element contained in the first layer 31 may not be included in the energy range. The X-ray analysis apparatus 100 can also perform the process by using the two energies $E_1$ and $E_2$ in the relatively low energy range.

In Embodiment 1, an example has been shown in which the sample 3 includes the first layer 31 and the second layer 32. However, the X-ray analysis apparatus 100 may be configured to measure the thickness of the first layer 31 included in the sample 3 that includes three or more stacked layers. For example, when the first layer 31 is covered with a thinner front surface layer, the X-ray analysis apparatus 100 may measure the thickness $t_1$ of the first layer 31 by calculating the thickness of the front surface layer and performing element analysis on the first layer 31 based on the detection result of fluorescent X-rays. For example, when the first layer 31 is stacked on a plurality of layers, the X-ray analysis apparatus 100 may measure the thickness $t_1$ of the first layer 31 by calculation using Equation (5) or Equation (3) that includes terms related to layers other than the first layer 31 and the second layer 32. The X-ray analysis apparatus 100 may measure the thickness $t_1$ of the first layer 31 by calculation using Equation (3) or Equation (5), assuming that the plurality of layers other than the first layer 31 correspond to the second layer 32.

<Embodiment 2>

The functional configurations of an X-ray analysis apparatus 100 and an analysis unit 1 according to Embodiment 2 are similar to those in Embodiment 2. In Embodiment 2, the X-ray analysis apparatus 100 calculates the thickness $t_1$ of the first layer 31 included in the sample 3 based on fluorescent X-rays. When the thickness $t_1$ of the first layer 31 is relatively small, the thickness $t_1$ can be calculated based on the fluorescent X-rays without using the detection result of transmitted X-rays.

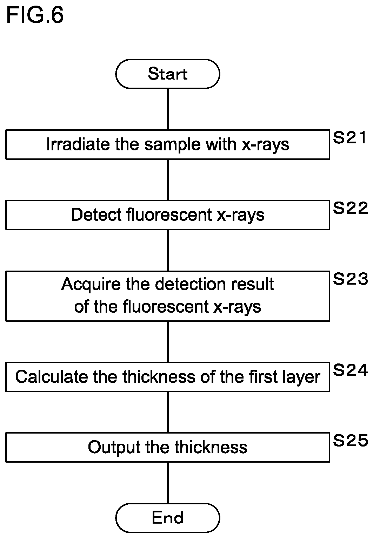

FIG. 6 is a flowchart showing an example of the procedure of processing performed by the X-ray analysis apparatus 100 according to Embodiment 2 to measure the thickness $t_1$ of the first layer 31 evaluation based on fluorescent X-rays. The irradiation unit 21 irradiates the sample 3 with X-rays (S21), and the fluorescent X-ray detector 22 detects fluorescent X-rays (S22). The fluorescent X-ray detector 22 outputs a signal having an intensity corresponding to the energy of the fluorescent X-rays to the first signal processing unit 24, and the first signal processing unit 24 counts a signal for each signal value and outputs data indicating the relationship between the signal value and the count number to the analysis unit 1. The analysis unit 1 acquires the detection result of the fluorescent X-rays by receiving the data from the first signal processing unit 24 and the second signal processing unit 25 (S23). The analysis unit 1 generates a spectrum of the fluorescent X-rays, and stores the spectrum data in the storage unit 14.

The analysis unit 1 calculates the thickness $t_1$ of the first layer 31 included in the sample 3 by performing element analysis based on the spectrum of the fluorescent X-rays (S24). In S24, the arithmetic unit 11 specifies an element contained in the first layer 31 by performing element analysis based on the spectrum of the fluorescent X-rays, as in the first embodiment. In addition, the arithmetic unit 11 calculates the thickness $t_1$ of the first layer 31 based on the fluorescent X-rays using conventional techniques. For example, the arithmetic unit 11 calculates the thickness $t_1$ of the first layer 31 according to the intensity of a peak included in the obtained fluorescent X-ray spectrum, in accordance with the relationship between the thickness $t_1$ and the intensity of a peak due to a specific element contained in the fluorescent X-ray spectrum. The relationship between the intensity of the peak and the thickness $t_1$ is examined in advance and stored in the storage unit 14.

The analysis unit 1 outputs the calculated thickness $t_1$ of the first layer 31 (S25). In S25, the arithmetic unit 11 outputs the thickness $t_1$ by displaying the value of the calculated thickness $t_1$ of the first layer 31 on the display unit 27. The arithmetic unit 11 stores the thickness $t_1$ of the first layer 31 in the storage unit 14. After the end of S25, the analysis unit 1 ends the process for measuring the thickness $t_1$ of the first layer 31.

The X-ray analysis apparatus 100 can perform both the processes of S101 to S110 and the processes of S21 to S24. The X-ray analysis apparatus 100 can switch between the processes of S101 to S110 and the processes of S21 to S24 as processes to be performed. For example, the user inputs an instruction to switch between processes to the analysis unit 1 by operating the operation unit 15, and the analysis unit 1 switches between the processes to be performed in response to the instruction.

When the thickness $t_1$ of the first layer 31 is relatively small, the X-ray analysis apparatus 100 can easily measure the thickness $t_1$ of the first layer 31 by performing the processes of S21 to S25. When the thickness $t_1$ of the first layer 31 is relatively large, the X-ray analysis apparatus 100 can measure the thickness $t_1$ of the first layer 31 more accurately by performing the processes of S101 to S110. In this manner, in Embodiment 2, the thickness $t_1$ of the first layer 31 can be measured using an appropriate method depending on the magnitude of the thickness $t_1$ of the first layer 31.

In Embodiments 1 and 2, the thickness $t_1$ of the first layer 31 is measured using the mass absorption coefficient for X-rays. However, the X-ray analysis apparatus 100 may be configured to measure the thickness $t_1$ of the first layer 31 using a linear absorption coefficient as an X-ray absorption coefficient.

In Embodiments 1 and 2, the fluorescent X-ray detector 22 and the transmitted X-ray detector 23 are radiation detectors having radiation detection elements formed using semiconductors. The fluorescent X-ray detector 22 and the transmitted X-ray detector 23 may be radiation detectors having radiation detection elements other than those formed using semiconductors. The fluorescent X-ray detector 22 and the transmitted X-ray detector 23 may be detectors having a plurality of channels. For example, the fluorescent X-ray detector 22 and the transmitted X-ray detector 23 may be strip detectors, pixel array detectors, or line sensors, or may be configured to include a plurality of detectors arranged side by side. When a detector having a plurality of channels is used, it is possible to perform measurement at a higher counting rate than when a detector having a single channel is used.

The fluorescent X-ray detector 22 and the transmitted X-ray detector 23 are not limited to energy dispersive detectors, and may be any detector capable of detecting the intensity of X-rays of specific energies $E_1$ and $E_2$. For example, the fluorescent X-ray detector 22 and the transmitted X-ray detector 23 may be configured using a CCD (Charge Coupled Device) photosensor or a CMOS (Complementary Metal-Oxide-Semiconductor) photosensor, or may be configured using a combination of a photomultiplier tube and a scintillator. Such detectors may be used in combination with filters that transmit X-rays of a specific energy or elements that collect X-rays of a specific energy by diffraction.

In Embodiments 1 and 2, an example has been shown in which the horizontal axis of the X-ray spectrum is energy, but the X-ray analysis apparatus 100 may be configured to handle a spectrum in which the horizontal axis is a value other than energy, such as a wavelength or a wave number. In this form, the analysis unit 1 may perform a process of calculating the thickness $t_1$ of the first layer 31 using two wavelengths or wave numbers corresponding to two energies.

The X-ray analysis apparatus 100 may be configured to include a mechanism capable of adjusting the intensity of transmitted X-rays. When the intensity of the transmitted X-rays is too high, the amount of X-rays incident on the transmitted X-ray detector 23 increases. Accordingly, a probability that signals in response to the incidence of the X-rays will overlap increases and a dead time for detection may increase, or the transmitted X-ray detector 23 may fail. In order to be able to handle various samples 3 having different thicknesses or to prevent the failure of the transmitted X-ray detector 23, it is desirable to be able to adjust the intensity of the transmitted X-rays. For example, the X-ray analysis apparatus 100 includes an adjustment mechanism that adjusts the intensity of the transmitted X-rays when the intensity of the detected transmitted X-rays exceeds a predetermined threshold value or when the dead time exceeds a predetermined threshold value. For example, the adjustment mechanism adjusts the intensity of the X-rays emitted from the irradiation unit 21 by adjusting the current flowing through the X-ray tube. For example, the adjustment mechanism includes a collimator disposed between the irradiation unit 21 and the sample 3, and adjusts the intensity of the X-rays emitted to the sample 3 by changing the size of the collimator or by replacing collimators of a plurality of sizes. For example, the adjustment mechanism adjusts the intensity of the transmitted X-rays by adjusting the distance between the sample 3 and the transmitted X-ray detector 23.

The present invention is not limited to the content of the above-described embodiments, and various changes can be made within the scope of the claims. That is, embodiments obtained by combining technical means appropriately changed within the scope of the claims are also included in the technical scope of the present invention.

The features described in the respective embodiments can be combined with each other. In addition, the independent claims and the dependent claims described in the claims can be combined with each other in all combinations, regardless of the citation form. In addition, although the form of multiple claims that cite two or more other claims (multi-claim form) is used in the scope of claims, the present invention is not limited thereto. A form of multi-claim (multi-multi claims) that cites at least one multi-claim can also be used.

Reference Signs List

100    X-ray analysis apparatus
1      analysis unit
10     recording medium
141    computer program
21     irradiation unit
22     fluorescent X-ray detector
23     transmitted X-ray detector
3      sample
31     first layer
32     second layer

**Claims**

1. A thickness measurement method, **characterized by** comprising:

    irradiating a sample including stacked first and second layers with X-rays so that the X-rays pass through the first and second layers in this order;
    detecting fluorescent X-rays generated from the first layer;
    detecting transmitted X-rays that have passed through the sample;
    specifying an X-ray absorption coefficient of the first layer and a density of the first layer by element analysis based on the fluorescent X-rays; and
    calculating a thickness of the first layer based on intensities of the transmitted X-rays at two different energies, the absorption coefficient, and the density.

2. The thickness measurement method according to claim 1, **characterized in that**
   a difference between the two energies is within a predetermined range.

3. The thickness measurement method according to claim 2, **characterized in that**
   an absorption edge of an element contained in the second layer is not included in an energy range between the two energies.

4. The thickness measurement method according to any one of claims 1 to 3, **characterized in that**
   the two energies are specified by element analysis based on the fluorescent X-rays so that an absorption edge of an element contained in the first layer is included in an energy range between the two energies.

5. An X-ray analysis apparatus, **characterized by** comprising:

    an irradiation unit that irradiates a sample including stacked first and second layers with X-rays so that the X-rays pass through the first and second layers in this order;
    a fluorescent X-ray detector that detects fluorescent X-rays generated from the first layer;
    a transmitted X-ray detector that detects transmitted X-rays that have passed through the sample; and
    an analysis unit,
    wherein the analysis unit specifies an X-ray absorption coefficient of the first layer and a density of the first layer by element analysis based on the fluorescent X-rays, and calculates a thickness of the first layer based on intensities of the transmitted X-rays at two different energies, the absorption coefficient, and the density.

6. The X-ray analysis apparatus according to claim 5, **characterized in that**
   the analysis unit calculates the thickness of the first layer by element analysis based on the fluorescent X-rays without using a detection result of the transmitted X-rays.

7. An information processing apparatus, **characterized by** comprising:

    an acquisition unit that acquires a detection result of fluorescent X-rays generated from a first layer and a detection result of transmitted X-rays that have passed through a sample, which includes the first layer and a second layer that are stacked, by irradiating the sample with X-rays so that the X-rays pass through the first and second layers in this order;
    a specifying unit that specifies an X-ray absorption coefficient of the first layer and a density of the first layer by element analysis based on the detection result of the fluorescent X-rays; and

a calculation unit that calculates a thickness of the first layer based on intensities of the transmitted X-rays at two different energies, the absorption coefficient, and the density.

8. A computer program, **characterized by** causing a computer to execute processing of:

specifying an X-ray absorption coefficient of a first layer and a density of the first layer by performing element analysis based on a detection result of fluorescent X-rays that are generated from the first layer by irradiating a sample, which includes the first layer and a second layer that are stacked, with X-rays so that the X-rays pass through the first and second layers in this order; and
calculating a thickness of the first layer based on the absorption coefficient, the density, and intensities of transmitted X-rays at two different energies included in a detection result of the transmitted X-rays that have passed through the sample.

FIG.1

## FIG.2

FIG.3

$I_O(E_1)$, $I_O(E_2)$

$I_F(E_1)$, $I_F(E_2)$

31

3

32

$t_1$

$t_2$

$I_T(E_1)$, $I_T(E_2)$

FIG.4

## FIG.5

```
          Start

  Irradiate the sample with x-rays          S101

  Detect the fluorescent x-rays             S102

  Detect the transmitted x-rays             S103

  Acquire the detection results of the      S104
  fluorescent x-rays and the transmitted x-rays

  Specify an element contained in the first layer   S105

  Specify the two energies                  S106

  Specify the mass absorption coefficient   S107
  and the density of the first layer

  Specify the intensity of the transmitted x-rays   S108

  Calculate the thickness of the first layer   S109

  Output the thickness                      S110

          End
```

# FIG.6

```
        ( Start )
            |
  +------------------------------------+
  | Irradiate the sample with x-rays   | S21
  +------------------------------------+
            |
  +------------------------------------+
  | Detect fluorescent x-rays          | S22
  +------------------------------------+
            |
  +------------------------------------+
  | Acquire the detection result       | S23
  | of the fluorescent x-rays          |
  +------------------------------------+
            |
  +------------------------------------+
  | Calculate the thickness of the first layer | S24
  +------------------------------------+
            |
  +------------------------------------+
  | Output the thickness               | S25
  +------------------------------------+
            |
        ( End )
```

## INTERNATIONAL SEARCH REPORT

International application No.

**PCT/JP2023/023738**

### A.    CLASSIFICATION OF SUBJECT MATTER

***G01B 15/02***(2006.01)i; ***G01N 23/087***(2018.01)i; ***G01N 23/223***(2006.01)i
FI:    G01B15/02 A; G01N23/087; G01N23/223

According to International Patent Classification (IPC) or to both national classification and IPC

### B.    FIELDS SEARCHED

Minimum documentation searched (classification system followed by classification symbols)

G01B15/00-15/08; G01N23/00-23/2276

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 123315/1985 (Laid-open No. 038509/1986) (SUMITOMO METAL INDUSTRIES, LTD.) 11 March 1986 (1986-03-11), p. 3, line 8 to p. 6, line 13, fig. 1-3 | 1-8 |
| A | JP 63-091506 A (KAWASAKI STEEL CORP., RIGAKU KEISOKU K.K.) 22 April 1988 (1988-04-22) p. 3, lower left column to p. 4, upper left column, fig. 1-4 | 1-8 |
| A | JP 03-094444 A (FUJITSU LTD.) 19 April 1991 (1991-04-19) p. 3, upper right column, line 12 to p. 4, upper right column, line 18, fig. 1, 2 | 1-8 |

☐ Further documents are listed in the continuation of Box C.    ☑ See patent family annex.

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **31 August 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/023738**

| Patent document cited in search report | | | Publication date (day/month/year) | Patent family member(s) | Publication date (day/month/year) |
|---|---|---|---|---|---|
| JP | 61-038509 | U1 | 11 March 1986 | (Family: none) | |
| JP | 63-091506 | A | 22 April 1988 | (Family: none) | |
| JP | 03-094444 | A | 19 April 1991 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11287643 A